# EUROPÄISCHE PATENTSCHRIFT

(11) **EP 2 580 492 B1**
(45) Veröffentlichungstag und Bekanntmachung des Hinweises auf die Patenterteilung: **30.09.2015**
(21) Anmeldenummer: 11718375.6
(22) Anmeldetag: 06.05.2011
(51) Int. Cl.: F16H 13/08

(54) **DYNAMOELEKTRISCHE MASCHINE MIT EINEM EIGENLÜFTER**
DYNAMO-ELECTRIC MACHINE COMPRISING AN INTEGRATED VENTILATOR
MACHINE DYNAMOÉLECTRIQUE MUNIE DE SON PROPRE VENTILATEUR

(30) Priorität: 11.06.2010 DE 102010029997
(43) Veröffentlichungstag der Anmeldung: 17.04.2013
(73) Patentinhaber: Siemens Aktiengesellschaft, 80333 München (DE)
(72) Erfinder: WINKLER, Günther, A-4785 Haibach (AT)
(86) Internationale Anmeldenummer: PCT/EP2011/057268
(87) Internationale Veröffentlichungsnummer: WO 2011/154206

(56) Entgegenhaltungen:
- EP-A1- 0 276 085
- GB-A- 1 284 447
- US-A- 2 528 470
- US-A- 2 536 992
- US-A- 3 144 789

## Beschreibung

Die Erfindung betrifft eine dynamoelektrische Maschine mit einem Eigenlüfter auf einer Welle.

Bei dynamoelektrischen Maschinen, Elektromotoren bzw. Generatoren mit Eigenbelüftung ist die Drehzahl eines Rotors und des damit mit einer Welle drehfest verbundenen eingebauten Wellenlüfters die bestimmende Größe für den Kühlmitteldurchsatz. Speziell bei hochpoligen dynamoelektrischen Maschinen, also bei vergleichsweise langsam drehenden Rotoren ist der durch Rotation des Lüfters verursachte Kühlmitteldurchsatz selten ausreichend um eine ausreichende Kühlung der dynamoelektrischen Maschine zu gewährleisten.

Eine ausreichende Kühlung wird bisher dadurch erreicht, dass eine zusätzliche Fremdbelüftung der dynamoelektrischen Maschine vorgesehen wird. Dies bedeutet aber einen höheren technischen Aufwand und höhere Herstellungskosten der dynamoelektrischen Maschine.

**Aus der** GB-A-1 284 447, **die als nächstliegenden Stand der Technik angesehen wird, ist eine Drehmomentübertragungsvorrichtung bekannt, die über eine Anordnung von Lagern ein Drehmoment überträgt.**

Diese Schrift offenbart einen Antrieb für einen Eigenlüfter, der mittels einem Reibradplanetengetriebe mit der Welle verbunden ist, wobei das Reibradplanetengetriebe zwei Wälzlager aufweist, wobei die Drehzahl der Welle mit Hilfe einer Mitnehmerbuchse auf die Kugeln eines modifizierten Lagers übertragen wird, so dass die Drehzahl des Lüfters um einen vorgegebene Faktor gegenüber der Drehzahl der Welle erhöht ist.

**Aus der** US-A-3,144,789 **ist ein Lüfterantrieb bekannt, bei dem die Drehzahl herabgesetzt wird.**

Ausgehend davon liegt der Erfindung die Aufgabe zugrunde, eine dynamoelektrische Maschine, insbesondere eine hochpolige dynamoelektrische Maschine mit einem Eigenlüfter zu schaffen, der eine ausreichende Kühlung der dynamoelektrischen Maschine gewährleistet.

Die Lösung der gestellten Aufgabe gelingt durch eine dynamoelektrische Maschine, insbesondere hochpolige dynamoelektrische Maschine mit einer Welle und mit einem Eigenlüfter, der mittels einem Reibradplanetengetriebe mit der Welle verbunden ist.

Durch den Einbau eines kompakten Reibradgetriebes im Sinne eines Reibradplanetengetriebes an der Lüfternabe kann die Lüfterdrehzahl gegenüber der Wellendrehzahl um einen vorgebbaren Faktor erhöht werden. In der Praxis bewährt hat sich ein Faktor 2. Damit ergibt sich auch eine Vervielfachung der durch den angetriebenen Lüfter geförderten Luftmenge in der dynamoelektrischen Maschine.

Vorteilhafterweise wird diese Lösung des Reibradplanetengetriebes durch Standardlager realisiert, die lediglich eine einfache Modifikation in einem Käfig eines Wälzlagers erfordern. Die Modifikation betrifft die Mitnehmerbuchse für die Wälzkörper. Über die Mitnehmerbuchse wird die Drehzahl der Welle auf die Wälzkörper eines Lagers übertragen.

Des Weiteren ist dieses Reibradplanetengetriebe in die Lüfternabe integriert und erfordert somit keinen zusätzlichen axialen Bauraum.

Durch Verwendung von tausendfach bewährten Standardteilen, wie z.B. Standardlager ist eine ausfallsichere Ausführung dieses Eigenlüfters gewährleistet. Das Prinzip des Reibradplanetengetriebes für die integrierte Anwendung in der Lüfternabe besteht darin, dass die Übersetzung abhängig ist von der Differenz der Durchmesser der Bahnen der beiden Wälzlager. Je kleiner die Differenz ist desto größer ist die Übersetzung dieses Getriebes.

Das Reibradplanetengetriebe, das vorteilhafterweise aus Wälzlagern aufgebaut ist, weist unter anderem folgende Elemente auf:
- Zwei Wälzlager unterschiedlichen Durchmessers,
- eine Antriebswelle auf der die Innenlagerringe der beiden Wälzlager axial gegeneinander gepresst sind,
- eine Mitnehmerbuchse, die die Drehzahl der Welle auf die Wälzkörper eines Wälzlagers überträgt, und
- einen Zwischenring, der die Außenringe der beiden Wälzlager trennt und dadurch die Anpressung der inneren Ringe gegen die äußeren ermöglicht.

Vorteilhafterweise bildet der Zwischenring, der die beiden Außenringe der Wälzlager trennt gleichzeitig die Lüfternabe, von der sich die Lüfterflügel im Wesentlichen radial erstrecken.

Durch eine nahezu Verdoppelung der Drehzahl des Lüfters gegenüber der Wellendrehzahl, tritt eine Verachtfachung der Lüfterleistung ein.

Dies ist insbesondere bei Langsamläufer, also hochpoligen dynamoelektrischen Maschinen von großem Vorteil, da auch bei geringeren Drehzahlen der Welle ein ausreichender Luftdurchsatz zur Kühlung bereitgestellt wird, ohne zusätzliche Fremdbelüftung.

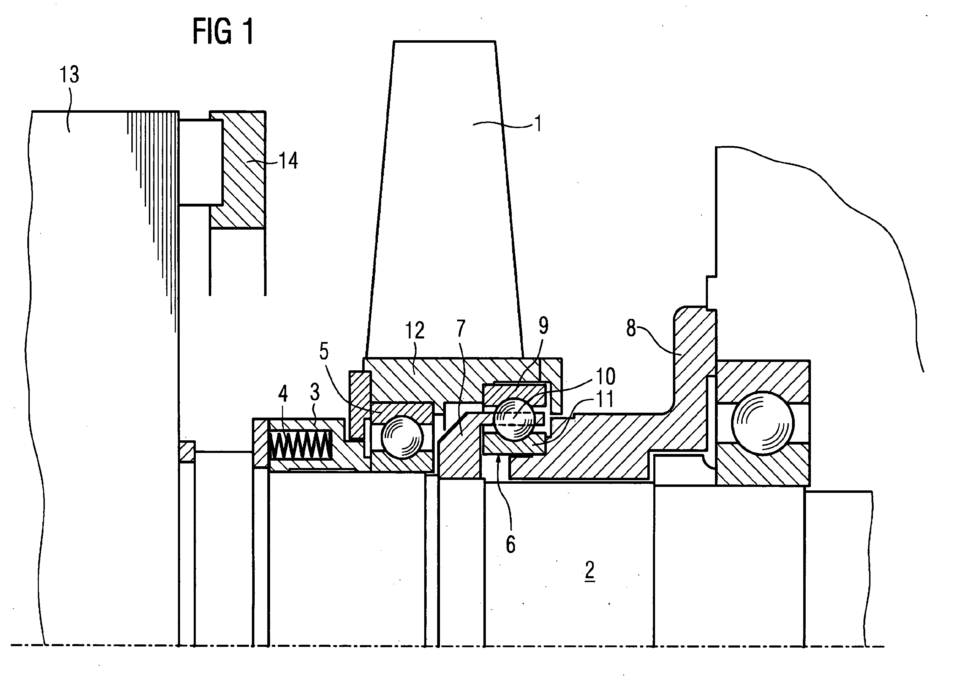

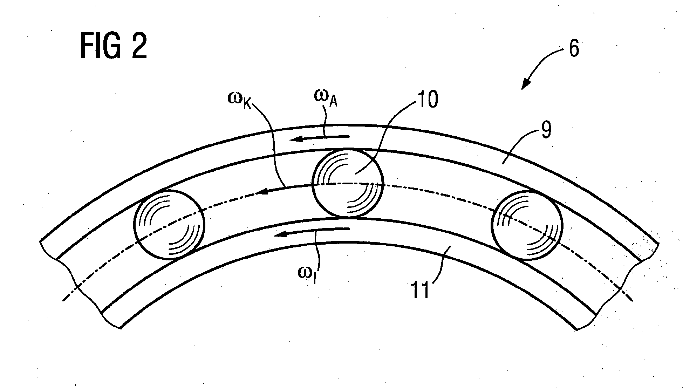

Die Erfindung sowie weitere vorteilhafte Ausgestaltungen der Erfindung werden anhand eines prinzipiell dargestellten Ausführungsbeispiels näher erläutert. Darin zeigt die Figur einen Längsschnitt eines erfindungsgemäßen Eigenlüfters einer dynamoelektrischen Maschine.

Des Weiteren zeigt die Figur zeigt einen Lüfterflügel 1 eines Axial- oder Radiallüfters, der auf einer Welle 2 einer näher dargestellten dynamoelektrischen Maschine positioniert ist. Die Welle 2 ist mit einem Kurzschlussläufer 13 der dynamoelektrischen Maschine drehfest verbunden, wobei an der Stirnseite des Kurschlussläufers ein Kurzschlussring 14 dargestellt ist.

Die Welle 2 kann ebenso mit einem anderen Läufer drehfest verbunden sein, beispielsweise einem Läufer mit einer elektrischen Erregung oder einer Erregung durch Permanentmagnete.

Bei Drehung der Welle 2 wird die Drehzahl dieser Welle 2 mit Hilfe der Mitnehmerbuchse 7 auf die Kugeln 10 eines modifizierten Lagers 6 übertragen. Diese Rollen an einem feststehenden Innenring 11 des modifizierten Lagers 6 ab. Der Innenring 11 wird mit Hilfe eines Lagerdeckels 8 fixiert. Durch die kinematische Übersetzung wird nunmehr die Drehzahl des Außenrings 9 des modifizierten Lagers 6 gegenüber der Welle 2 in diesem Fall nahezu verdoppelt. Da der Außenring 9 des modifizierten Lagers 6 in eine Nabe des Lüfters eingepresst ist, rotiert daher die Lüfternabe ebenfalls mit der erhöhten Drehzahl.

Um eine ausreichende Drehmomentübertragung im Reibradplanetengetriebe zu erhalten, ist auf der Welle 2 eine mit Druck-, federn 4 beaufschlagte Anpresshülse 3 axial verschiebbar angeordnet. Diese Anpresshülse 3 stützt sich am Innenring des Lagers 5 ab. Das Lager 5 leitet unabhängig von der Drehzahl der Welle die axiale Anpresskraft über den Außenring des Lagers 5 an die Lüfternabe 12.

Die Mitnehmerbuchse 7 ist dabei zwischen den beiden Wälzlagern, also dem modifizierten Lager 6 und dem Lager 5 angeordnet.

Über einen Anlagebund in der Lüfternabe 12 wird der Außenring 9 an die Kugeln 10 des modifizierten Lagers 6 gepresst. Die dadurch entstehende Kontaktreibung begrenzt das zu übertragende Drehmoment. Es ist somit eine Überlastkupplung geschaffen.

## Patentansprüche

1. Dynamoelektrische Maschine, insbesondere hochpolige dynamoelektrische Maschine, mit einer Welle (2) und mit einem Eigenlüfter, der mittels einem Reibradplanetengetriebe mit der Welle (2) verbunden ist, wobei das Reibradplanetengetriebe Wälzlager (5, 6) aufweist, wobei der Außenring (9) **eines ersten Wälzlagers (5) in einer Nabe des Lüfters angebracht ist, und der Außenring (9) eines zweiten, modifizierten Lagers (6)** in **der** Nabe des Lüfters eingepresst ist, wobei die Drehzahl **der** Welle (2) mit Hilfe einer Mitnehmerbuchse (7) auf die Kugeln (10) des modifizierten Lagers (6) übertragen wird, so dass die Drehzahl des Lüfters um einen vorgegebenen Faktor gegenüber der Drehzahl der Welle (2) erhöht ist, wobei die Mitnehmerbuchse (7) zwischen den beiden Wälzlagern (5,6) angeordnet ist.

2. Dynamoelektrische Maschine nach einem der vorhergehenden Ansprüche, **dadurch gekennzeichnet, dass** die zwei Wälzlager (5,6) unterschiedliche Durchmesser aufweisen.

3. Dynamoelektrische Maschine nach einem der vorhergehenden Ansprüche, **dadurch gekennzeichnet , dass** das Reibradplanetengetriebe in einer Nabe des Lüfters angeordnet ist.

## Claims

1. Dynamoelectric machine, in particular a multipole dynamoelectric machine, having a shaft (2) and having an integrated fan which is connected to the shaft (2) by means of a friction-wheel planetary gear, wherein the friction-wheel planetary gear has rolling bearings (5,6), wherein the outer ring (9) of **a first rolling bearing (5) is mounted in a hub of the fan, and the outer ring (9) of a second modified bearing (6)** is press-fitted in **the** hub of the fan, wherein the rotational speed **of the** shaft (2) is transmitted with the aid of a driving bush (7) onto the balls (10) of the modified bearing (6) such that the rotational speed of the fan is increased by a predefined factor compared to the rotational speed of the shaft (2), wherein the driving bush (7) is arranged between the two rolling bearings (5,6).

2. Dynamoelectric machine according to one of the preceding claims, **characterised in that** the two rolling bearings (5,6) have different diameters.

3. Dynamoelectric machine according to one of the preceding claims, **characterised in that** the friction-wheel planetary gear is arranged in a hub of the fan.

## Revendications

1. Machine dynamoélectrique, notamment machine dynamoélectrique multipôles, comprenant un arbre (2) et son propre ventilateur, qui est relié à l'arbre (2) au moyen d'un engrenage planétaire à friction, l'engrenage planétaire à friction ayant des roulements (5, 6), la bague (9) extérieure d'un premier palier (5) à roulement étant appliquée à un moyeu du ventilateur et la bague (9) extérieure d'un deuxième palier (6) modifié étant enfoncée dans le moyeu du ventilateur, la vitesse de rotation de l'arbre (2) étant transmise aux billes (10) du palier (6) modifié à l'aide d'une douille (7) d'entraînement, de manière à augmenter la vitesse de rotation du ventilateur d'un facteur donné à l'avance par rapport à la vitesse de rotation de l'arbre (2), la douille (7) d'entraînement étant montée entre les deux paliers (5, 6) à roulement.

2. Machine dynamoélectrique suivant l'une des revendications précédentes, **caractérisée en ce que** les deux paliers (5, 6) à roulement ont des diamètres différents.

3. Machine dynamoélectrique suivant l'une des revendications précédentes, **caractérisée en ce que** l'engrenage planétaire à friction est mis dans un moyeu du ventilateur.
